# EUROPEAN PATENT SPECIFICATION

(11) **EP 2 496 437 B1**
(45) Date of publication and mention of the grant of the patent: **16.10.2019**
(21) Application number: 10785197.4
(22) Date of filing: 04.11.2010
(51) Int. Cl.: H02M 3/158, B60L 50/20, B60L 58/20, H02J 7/14

(54) **VEHICULAR ELECTRIC POWER UNIT AND METHOD OF CONTROLLING THE SAME**
LEISTUNGSELEKTRONIKGERÄT FÜR EIN FAHRZEUG UND STEUERUNGSEINHEIT UND STEUERUNGSMETHODE
UNITÉ D'ALIMENTATION ÉLECTRIQUE POUR VÉHICULE ET SON PROCÉDÉ DE COMMANDE

(30) Priority: 05.11.2009 JP 2009253860
(43) Date of publication of application: 12.09.2012
(73) Proprietor: TOYOTA JIDOSHA KABUSHIKI KAISHA, Toyota-shi, Aichi-ken, 471-8571 (JP)
(72) Inventor: ITAGAKI, Kenji, Aichi-ken 471-8571 (JP); ANG, Wan, Leng, Aichi-ken 471-8571 (JP); MURASATO, Kenji, Aichi-ken 471-8571 (JP); SAWADA, Hiroki, Aichi 470-0334 (JP)
(74) Representative: TBK
(86) International application number: PCT/IB2010/002807
(87) International publication number: WO 2011/055217

(56) References cited:
- EP-A1- 2 034 583
- EP-A1- 2 104 199
- WO-A2-2009/125265
- US-A1- 2008 197 810

## Description

### BACKGROUND OF THE INVENTION

### 1. Field of the Invention

The invention relates to a vehicular electric power unit that supplies electric power to a motive power source of a vehicle from a plurality of electric storage devices, and more particularly, to an art for easily mounting the electric storage devices and smoothly switching between different sources of electric power supply among the electric storage devices.

### 2. Description of the Related Art

In recent years, hybrid vehicles, fuel-cell-powered vehicles, electric vehicles and the like, all of which use a motor as a drive power source, have been drawing attention as a measure against environmental issues.

For example, Japanese Patent Application Publication No. 2004-364481 (JP-A-2004-364481) describes an electric vehicle that can run with its running distance not limited depending on the capacity of a main battery as well as reducing the cost thereof. In addition to the main battery, the electric vehicle may also be equipped with a storage battery used to charge the main battery, and running by outputs from these batteries.

According to the above-described electric vehicle, by changing the main battery with the storage battery, a long journey can be driven by the electric vehicle .

However, if a plurality of the electric storage devices mounted on the vehicle are connected in parallel with one another, the case where one of a plurality of electric storage devices connected in parallel with one another is selected to supply electric power to an electric load, and the like, arc discharge may occur due to a difference in voltage among the plurality of the electric storage devices at the time of electric conduction among the electric storage devices, or current circulation may occur among the electric storage devices. In order to solve such problems, additional parts
such as coils, diodes, converters or the like, are generally needed. The addition of these parts contributes to increases in manufacturing cost.

In particular, electric storage devices constructed as batteries or the like cannot be manufactured completely identically due to the states of charge, the properties of battery cells, and the like. Therefore, when a conductive state is established among the electric storage devices, a difference in voltage inevitably arises, and current circulation may occur.

In the above-described electric vehicle, such problems are not considered at all.

Document US 2008/0197810 A1 discloses a vehicular power supply system in which a capacitor is used in addition to the secondary battery in order to generate additional power.

Document EP2034583 A1 discloses a power supply apparatus for a vehicle including a plurality of power storage devices.

Document WO 2009/125265 A2 discloses a power supply apparatus for a vehicle, which includes a main power supply that supplies electric power to a plurality of vehicle-mounted electric loads, and a subsidiary power supply charged with the electric power output from the main power supply.

### SUMMARY

The disclosure provides a vehicular electric power unit that makes it possible to easily mount a plurality of electric storage devices and smoothly switching between different sources of electric power supply among the electric storage devices, and a method of controlling the vehicular electric power unit.

According to a first aspect of the present invention, there is provided an electric power unit as defined in claim 1.

According to a second aspect of the present invention, there is provided a method as defined in claim 6.

Further embodiments of the present invention are set out in the dependent claims.

A first aspect of the disclosure relates to an electric power unit for a vehicle mounted on the vehicle. The electric power unit for vehicle includes: a first electric storage device; a converter for converting voltage supplied from the first electric storage device to a target voltage and supplying the voltage converted electric power to an electric component; an electric power line that connects the electric component with the converter; and a second electric storage device that has a positive electrode connected with a node provided on a positive electrode electric power line of the electric power line, for supplying electric power to the electric component.

In the foregoing aspect of the disclosure, the second electric storage device may have a lower threshold voltage that is set higher than an upper threshold voltage of the first electric storage device.

In the foregoing aspect of the disclosure, the positive electrode electric power line of the electric power line may be connected to the positive electrode of the second electric storage device, the positive electrode of the electric component, and the positive electrode of the converter. Further, a negative electrode electric power line of the electric power line may be connected to the negative electrode of the first electric storage device, the negative electrode of the second electric storage device, the negative electrode of the electric component, and the negative electrode of the converter.

In the foregoing aspect of the disclosure, the positive electrode of the first electric storage device may be connected to the node provided on the positive electrode electric power line of the electric power line via the converter.

In the foregoing aspect of the disclosure, the electric power unit for a vehicle may further include: a first relay that is provided in series with the second electric storage device, for connecting and disconnecting the second electric storage device with the electric power line; a system main relay that is provided between the first electric storage device and the converter, for connecting and disconnecting the first electric storage device and the converter; and a relay control unit that controls the first relay and the system main relay. The relay control unit may control the system main relay to connect the first electric storage device and the converter until the voltage supplied from the first electric storage device reaches the target voltage. The relay control unit may control the first relay to connect the second electric storage device with the electric power line when the voltage supplied from the first electric storage device reaches the target voltage.

In the foregoing aspect of the disclosure, the electric power unit for a vehicle may further include: a first relay that is provided in series with the second electric storage device, for connecting and disconnecting the second electric storage device with the electric power line; a third electric storage device; a second relay that is provided in series with the third electric storage device, for connecting and disconnecting the third electric storage device with the electric power line; and a relay control unit that controls the first and second relays. The second electric storage device and the first relay, and the third electric storage device and the second relay may be connected in parallel with one another. The relay control unit may control the first relay and the second relay in such a manner as to individually connect the first relay and second relay with the electric power line.

In the foregoing aspect of the disclosure, the electric power unit for a vehicle may further include: a detection unit for detecting a current between the positive electrode of the second electric storage device and the node; and a converter control unit for controlling the converter in accordance with the current detected by the detection unit. The converter control unit may control the converter such that the current detected by the detection unit becomes equal to or smaller than a threshold current, when switching a source of electric power supply from one of the second electric storage device and the third electric storage device to the other electric storage device. The converter control unit may command the relay control unit to switch the electric power supply source when the current detected by the detection unit falls to or below the threshold current.

In the foregoing aspect of the disclosure, the electric power unit for a vehicle may further include: a first relay that is provided in series with the second electric storage device, for connecting and disconnecting the second electric storage device with the electric power line; a system main relay that is provided between the first electric storage device and the converter, for connecting and disconnecting the first electric storage device and the converter; a relay control unit for controlling the first relay and the system main relay; a converter control unit for controlling the converter; and a charge control unit that controls the relay control unit and the converter control unit. The charge control unit may control the converter control unit such that the voltage supplied from the first electric storage device approaches the voltage supplied from the second electric storage device when a storage amount of the second electric storage device falls below a lower threshold. The charge controller may control the first relay to connect the second electric storage device with the electric power line and controls the system main relay to connect the first electric storage device and the converter, when a difference between the voltage supplied from the first electric storage device and the voltage supplied from the second electric storage device falls below a predetermined value.

A second aspect of the disclosure, relates to a method of controlling an electric power unit for a vehicle that includes at least a first electric storage device and a second electric storage device that can be connected with an electric component. The method of controlling the electric power unit for a vehicle includes: controlling the voltage supplied from the second electric storage device to match the voltage supplied from the first electric storage device when the first electric storage device is connected with the electric component; and disconnecting the first electric storage device from the electric component and connecting the second electric storage device with the electric component, when a difference between the voltage supplied from the second electric storage device and the voltage supplied from the first electric storage device falls below a predetermined value.

### BRIEF DESCRIPTION OF THE DRAWINGS

The features, advantages, and technical and industrial significance of this disclosure will be described in the following detailed description of an example embodiment of the invention with reference to the accompanying drawings, in which like numerals denote like elements, and wherein:

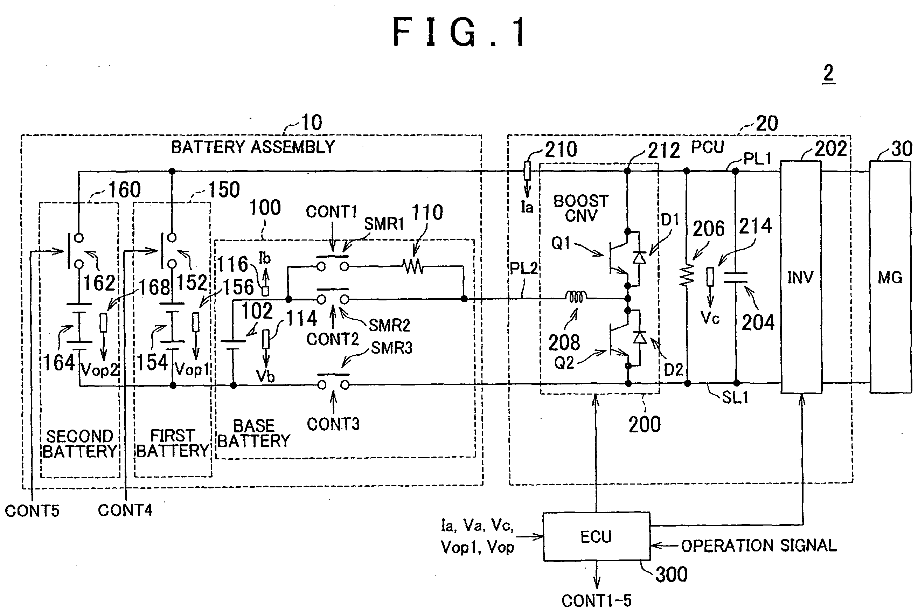

FIG. 1 is a view showing the overall configuration of a vehicular electric power unit according to the embodiment of the invention;
FIG. 2 is a view showing the relationship between SOC and open-circuit voltage OCV;
FIG 3 is a first functional block diagram of an ECU of the vehicular electric power unit according to the embodiment of the invention;
FIG. 4 is a first flowchart showing a control structure of a program executed by the ECU of the vehicular electric power unit;
FIG. 5 is a first set of timing charts showing the operation of the vehicular electric power unit ECU ;
FIG. 6 is a second functional block diagram of the vehicular electric power unit ECU;
FIG 7 is a second flowchart showing the control structure of the program executed by the vehicular electric power unit ECU;
FIG. 8 is a second set of timing charts showing the operation of the vehicular electric power unit ECU;
FIG 9 is a third functional block diagram of the vehicular electric power unit ECU; and
FIG. 10 is a third flowchart showing the control structure of the program executed by the vehicular electric power unit ECU.

### DETAILED DESCRIPTION OF EMBODIMENT

An embodiment of the invention will be described below with reference to the drawings. In the following description, like components are denoted by like reference symbols. The components denoted by the same reference symbol are identical in name and function. Accordingly, a detailed description of such components will not be repeated.

A vehicle 2 according to this embodiment of the invention includes a battery assembly 10, a power control unit (a PCU) 20, and a motor-generator 30.

The PCU 20 converts direct-current electric power (DC power) supplied from the battery assembly 10 into alternating-current electric power (AC power), and supplies the AC power to the motor-generator 30, thereby driving the motor-generator 30.

The motor-generator 30 is a motive power source of the vehicle 2, and drives the drive wheels using electric power drawn from the PCU 20. The motor-generator 30 may be, for example, a three-phase alternating-current synchronous motor.

The battery assembly 10 includes a base battery 100, a first (optional) battery 150, and a second (optional) battery 160. The first battery 150 is provided in parallel with the second battery 160.

The PCU 20 includes an inverter 202 that drives the motor-generator 30; an electric power line PL1 that supplies electric power to the inverter 202; a boost converter 200 that performs a voltage conversion, and that is provided between the base battery 100 and the electric power line PL1, a smoothing capacitor 204, and a discharge resistor 206. It should be noted that resistors in the drawings are denoted by zigzag lines.

The boost converter 200 converts the voltage supplied from the base battery 100 to a target voltage in accordance with a control signal sent from an electronic control unit (an ECU) 300. The boost converter 200 is connected to the inverter 202 via the electric power line PL1 and a grounding line SL1.

The boost converter 200 includes a reactor 208 that is connected at one end thereof to an electric power line PL2; IGBT elements Q1, Q2 that are connected in series with each other between the electric power line PL1 and the grounding line SL1; and diodes D1, D2 that are connected in parallel with the IGBT elements Q1, Q2 respectively.

The other end of the reactor 208 is connected to an emitter of the IGBT element Q1 and a collector of the IGBT element Q2. A cathode of the diode D1 is connected with a collector of the IGBT element Q1, and an anode of the diode D1 is connected with the emitter of the IGBT element Q1. A cathode of the diode D2 is connected with the collector of the IGBT element Q2, and an anode of the diode D2 is connected with an emitter of the IGBT element Q2.

The smoothing capacitor 204 is connected between the electric power line PL1 and the grounding line SL1. The smoothing capacitor 204 smoothes the voltage output from the boost converter 200 to the inverter 202.

A voltage sensor 214 detects the output voltage Vc of the boost converter 200 on the inverter 202 side. The voltage sensor 214 detects the voltage Vc between the electric power line PL1 and the grounding line SL1, and sends a signal indicating the detected voltage Vc to the ECU 300.

The discharge resistor 206 is connected between the electric power line PL1 and the grounding line SL1 in parallel with the boost converter 200, the inverter 202, and the smoothing capacitor 204 respectively. The discharge resistor 206 is used to discharge electric charge accumulated on the smoothing capacitor 204 after the stoppage of a system of the vehicle 2 or the like.

A current sensor 210 detects a current Ia on the electric power line PL1 between the battery assembly 10 and the boost converter 200. The current sensor 210 sends a signal indicating the detected current Ia to the ECU 300.

The inverter 202 converts a DC voltage given from the boost converter 200 to a three-phase AC voltage in accordance with a control signal received from the ECU 300, and outputs the three-phase AC voltage to the motor-generator 30.

The base battery 100 includes a base battery body 102; system main relays SMR1, SMR2 and SMR3; a limiting resistor 110 that is connected in series with the system main relay SMR1; a voltage sensor 114 for detecting a voltage Vb of the base battery 100; and a current sensor 116 for detecting the current Ib of the electric power line PL2.

The voltage sensor 114 sends to the ECU 300 a signal indicating the detected voltage Vb of the base battery 100. The current sensor 116 sends to the ECU 300 a signal indicating the detected current lb.

The system main relay SMR2 is arranged between a positive electrode of the base battery body 102 and the electric power line PL2. The system main relay SMR1 and the limiting resistor 110 are connected in parallel with the system main relay SMR2. The system main relay SMR3 is arranged between a negative electrode of the base battery body 102 and the grounding line SL1.

The energization state of the system main relays SMR1, SMR2, and SMR3 is controlled in accordance with control signals CONT1, CONT2, and CONT3 respectively given from the ECU 30.

The first battery 150 includes a first battery body 154; a first relay 152 connected in series with the first battery body 154; and a voltage sensor 156 for detecting a voltage Vop1 of the first battery 150. The second battery 160 includes a second battery body 164; a second relay 162 connected in series with the second battery body 164; and a voltage sensor 166 for detecting a voltage Vop2 of the second battery 160.

The voltage sensor 156 sends a signal indicating the detected voltage Vop1 to the ECU 300. The voltage sensor 166 sends a signal indicating the detected voltage Vop2 to the ECU 300.

A positive electrode of the first battery body 154 is connected via the first relay 152 with a node 212 provided on the electric power line PL1. The second battery body 164 is connected with the node 212 via the second relay 162. The node 212 is provided on the electric power line PL1 between the boost converter 200 and the inverter 202.

That is, the first battery body 154 and the first relay 152 are connected between the electric power line PL1 and the grounding line SL1. Further, the second battery body 164 and the second relay 162 are connected between the electric power line PL1 and the grounding line SL1.

That is, the first battery 150, the second battery 160, the boost converter 200, and the inverter 202 are connected in parallel with one another.

The first relay 152 is energized in accordance with a control signal CONT4 given from the ECU 300. The second relay 162 is energized in accordance with a control signal CONT5 given from the ECU 300.

In this embodiment of the invention, the base battery body 102, the first battery body 154, and the second battery body 164 are not limited in particular as long as they are electric storage devices. For example, the base battery body 102, the first battery body 154, and the second battery body 164 may be secondary batteries such as lead storage batteries, nickel hydride batteries, lithium ion batteries or the like. Alternatively, large-capacity capacitors such as electric double layer capacitors or the like may be employed instead of the batteries.

The vehicle 2 equipped with the vehicular electric power unit according to this embodiment of the invention is characterized in that the positive electrode of either the first battery 150 or the second battery 160 is connected with the node 212 between the boost converter 200 and the inverter 202 to supply an electric power to the inverter 202.

Further, in the vehicular electric power unit according to this embodiment of the invention, the lower limit voltages of each of the first battery 150 and the second battery 160 are set higher than the upper limit voltage of the base battery 100. In this embodiment of the invention, the lower limits of the voltages of the first battery 150 and the second battery 160 are set to predetermined lower limit thresholds according to respective capacities.

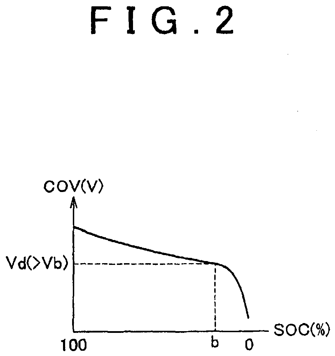

For example, FIG 2 shows the relationship between a state of charge (an SOC) and an open-circuit voltage OCV in the first battery 150. The ordinate in FIG. 2 represents the open-circuit voltage OCV, and abscissa in FIG. 2 represents the SOC. As shown in FIG. 2, the open-circuit voltage OCV tends to fall as the SOC decreases.

As shown in FIG 2, the first battery 150 is designed such that the voltage Vd of the first battery 150 when the SOC of the first battery 150 equals a predetermined lower limit threshold b is higher than the voltage Vb of the base battery 100. It should be noted that the second battery 160 is also designed in the same manner as the first battery 150. Therefore, the detailed description of the second battery 160 will not be repeated.

Furthermore, the ECU 300 of the vehicular electric power unit according to this embodiment of the invention controls the first relay 152 and the second relay 162 such that the first relay 152 and the second relay 162 are not energized at the same time.

Further, the ECU 300 controls the boost converter 200 so that when the source of electric power supply for the inverter 202 is switched from one of the first battery 150 and the second battery 160 to the other, the current detected by the current sensor 210 becomes equal to or smaller than a predetermined value indicating that a voltage of one of the electric storage devices is equal to an output voltage output from the boost converter 200 to the inverter 202 side. When the current detected by the current sensor 210 is equal to or below the prescribed current, the ECU 300 controls the first relay 152 and the second relay 162 in such a manner as to switch the electric power supply source.

The operation of the vehicular electric power unit in adopting the first battery 150 as the electric power supply source in activating the system of the vehicle 2 will be described.

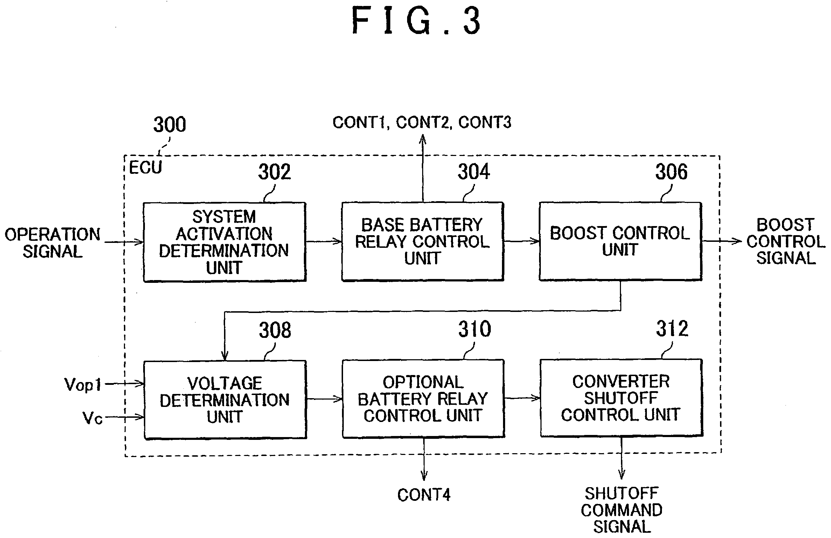

FIG. 3 shows a functional block diagram for switching the electric power supply source from the base battery to either of the first battery or the second battery in activating the system of the vehicle by means of the vehicular electric power unit ECU 300.

The ECU 300 includes a system activation determination unit 302, a base battery relay control unit 304, a boost control unit 306, a voltage determination portion 308, an optional battery relay control unit 310, and a converter shutoff control unit 312.

The system activation determination unit 302 determines whether there is a request to activate the system of the vehicle 2. For example, if the system activation determination unit 302 receives an operation signal from a start switch, the system activation determination unit 302 determines that there is a request to activate the system of the vehicle 2. The system activation determination unit 302 may turn an activation request determination flag on if it determines that there is a request to activate the system of the vehicle 2.

If it is determined that there is a request to activate the system of the vehicle 2, the base battery relay control unit 304 connects the system main relays SMR1, SMR3. The base battery relay control unit 304 may connect the system main relays SMR1, SMR3, for example, when the activation request determination flag is turned on.

The base battery relay control unit 304 connects the system main relay SMR2 and disconnects the system main relay SMR1 after a predetermined time period has elapsed after connecting the system main relays SMR1, SMR3.

When the system main relays SMR1, SMR3 are connected, the boost control unit 306 controls the boost converter 200 with the voltage Vop1 of the first battery 150. The voltage Vop1 of the first battery 150, which is detected by the voltage sensor 156, is set as a target voltage. More specifically, the boost control unit 306 controls the boost converter 200 so that the output voltage Vc of the boost converter 200 on the inverter 202 side, which is detected by the voltage sensor 214, coincides with the target voltage Vop1.

The voltage determination unit 308 determines whether an absolute value of a difference between the output voltage Vc and the voltage Vop1 of the first battery 150 is equal to or smaller than a predetermined value "A. The predetermined value A is a value that indicates the output voltage Vc equals the voltage Vop1, and is not limited to a particular value. It should be noted that the voltage determination unit 308 may, for example, turn a voltage determination flag on when the absolute value of the difference between the output voltage Vc and the voltage Vop1 is equal to or smaller than the predetermined value A.

If the absolute value of the difference between the output voltage Vc and the voltage Vop1 is equal to or below the predetermined value A, the optional battery relay control unit 310 controls the first relay 152 such that energizes the first relay 152. The battery relay control unit 310 may control the first relay 152 so that the first relay 152 is energized, for example, when the voltage determination flag is turned on.

The converter shutoff control unit 312 shuts the boost converter 200 off simultaneously with or before or after the conduction of the first relay 152. More specifically, the converter shutoff control unit 312 stops switching operations of the IGBT elements Q1, Q2.

In this embodiment of the invention, the system activation determination unit 302, the base battery relay control unit 304, the boost control unit 306, the voltage determination unit 308, the optional battery relay control unit 310, and the converter shutoff control unit 312 are all described as functioning as pieces of software realized through the execution of programs stored in a memory by a CPU of the ECU 300, but may also be realized by pieces of hardware. The programs may recorded on a storage medium and mounted on the vehicle.

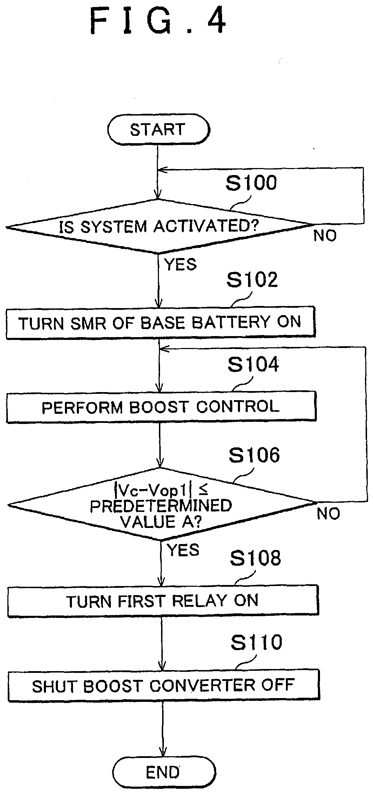

Referring to FIG 4, the control structure of a program for switching the electric power supply source from the base battery to the battery in activating the system of the vehicle, which is executed by the vehicular electric power unit ECU 300, will be described.

In step (which will be referred to hereinafter as S) 100, the ECU 300 determines whether the system of the vehicle 2 is activated. If it is determined that the system of the vehicle 2 is activated (YES in S100), the process proceeds to S102. Otherwise (NO in S100), the process returns to S100.

In S102, the ECU 300 connects the system main relays SMR1, SMR3 of the base battery 100. In S104, the ECU 300 controls the boost converter 200 so that the output voltage Vc of the boost converter 200 becomes equal to the target voltage Vop1.

In S106, the ECU 300 determines whether the absolute value of the difference between the output voltage Vc and the voltage Vop1 is equal to or below the predetermined value A. If the absolute value of the difference between the output voltage Vc and the voltage Vop1 of the optional battery is equal to or below the predetermined value A (YES in S106), the process proceeds to S108. Otherwise (NO in S106), the process returns to S104.

In S108, the ECU 300 connects the first relay 152 such that the first relay 152 becomes conductive. In S110, the ECU 300 shuts the boost converter 200 off.

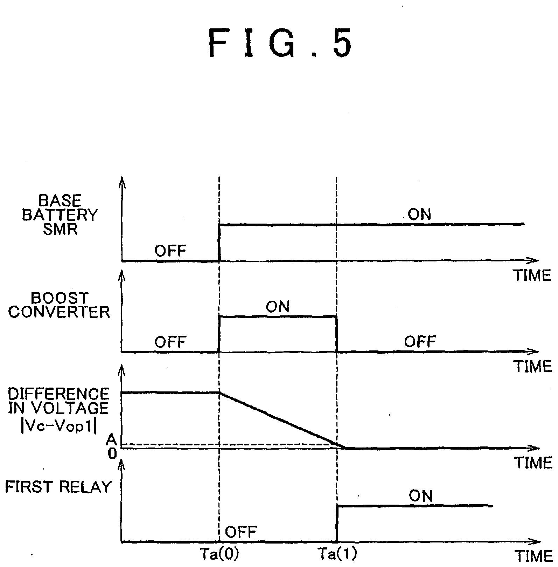

The switch to the first battery 150 as the of electric power supply source in activating the system of the vehicle 2 when the vehicle 2 is activated as performed by the vehicular electric power unit ECU 300 described above, will be described with reference to FIG. 5.

For example, it is assumed that the system of the vehicle 2 is off. When the driver operates the start switch to activate the vehicle 2 (YES in S100) at a time Ta (0), the system main relays SMR1, SMR3 of the base battery 100 are activated (S102), and boost control for the boost converter 200 is started (S104).

Thus, the output voltage Vc approaches the voltage Vop1 of the first battery 150. Therefore, the absolute value of the difference between the output voltage Vc and the voltage Vop1 decreases.

When the absolute value of the difference between the output voltage Vc and the target voltage Vop1 is equal to or below the predetermined value A (YES in S106) at a time Ta(1), the first relay 152 is energized (S108), and the boost converter 200 is shut off (S110).

By thus controlling the boost converter 200 so that the output voltage Vc approaches the voltage of the first battery 150, arcing is less likely to occur at the contact portion when the first relay 152 is connected.

Although the operation of switching the electric power supply source to the first battery 150 when activating the system of the vehicle 2 has been described above, the same holds true for switching the electric power supply source to the second battery 150 when activating the system of the vehicle 2. Therefore, the detailed description of this operation will not be repeated. In activating the system of the vehicle 2, the ECU 300 may, for example, adopt either of the first battery 150 or the second battery 160 that has an SOC below that of the other, or adopt the one that has an SOC higher than that of the other, as the source of electric power supply.

The operation of switching the electric power source to the second battery 160 when the SOC of the first battery 150 has fallen below a lower threshold B will be described next.

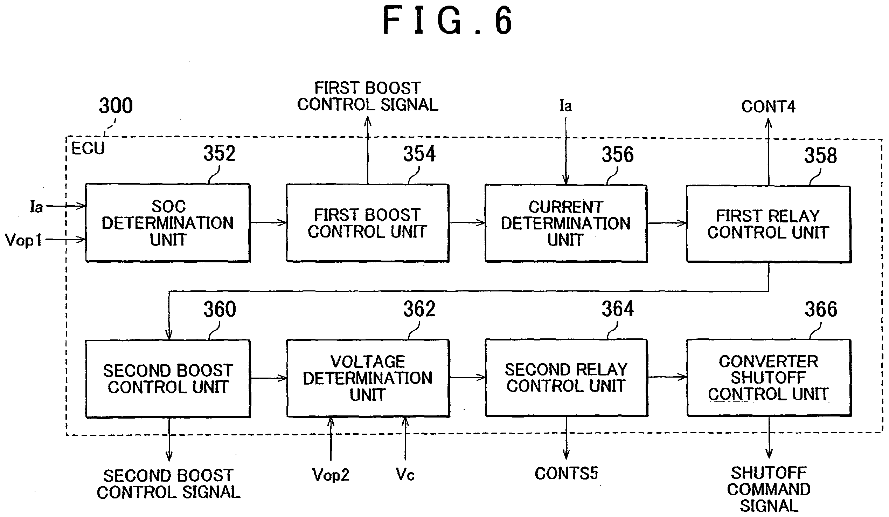

FIG. 6 shows a functional block diagram for switching the source of electric power supply from the first battery 150 to the second battery 160 using the ECU 300 included in the vehicular electric power unit.

The ECU 300 includes an SOC determination unit 352, a first boost control unit 354, a current determination unit 356, a first relay control unit 358, a second boost control unit 360, a voltage determination unit 362, a second relay control unit 364, and a converter shutoff control unit 366.

The SOC determination unit 352 determines whether the SOC of the first battery 150 has fallen below the lower threshold B. The SOC determination unit 352 estimates the SOC of the first battery 150 based on, for example, the voltage Vop1 of the first battery 150 and a current Ia, and determines whether the estimated SOC has fallen below the lower threshold B. It should be noted that the SOC determination unit 352 may, for example, turn a first SOC decrease determination flag on if it determines that the estimated SOC has fallen below the lower threshold B.

When the SOC of the first battery 150 has fallen below the lower threshold B, the first boost control unit 354 sets the voltage Vop1 of the first battery 150 as a target voltage, and controls the boost converter 200 so that the output voltage Vc of the boost converter 200 on the inverter 202 side approaches the target voltage Vop1.

It should be noted that the first boost control unit 354 may control the boost converter 200 so that the output voltage Vc of the boost converter 200 on the inverter 202 side approaches the target voltage Vop1, for example, when the first SOC decrease determination flag is turned on.

The current determination unit 356 determines whether the current Ia is equal to or below a threshold current C. The value of the threshold current C may be a value at which the output voltage Vc is equal to the target voltage Vop1, namely, a value that indicates no current is flowing through the electric power line PL1 between the battery assembly 10 and the boost converter 200. For example, the threshold current C may be zero, or may be a value larger than zero which takes an error of the current sensor 210 and the like into account

The current determination unit 356 may, for example, turn a current determination flag on if it determines that the current Ia is equal to or below the threshold current C.

If it is determined that the current Ia is equal to or below the threshold current C, the first relay control unit 358 sends a control signal CONT4 to command the disconnection of the first relay 152. The first relay control unit 358 may disconnect the first relay 152, for example, when the current determination flag is turned on.

After the first relay 152 is disconnected, the second boost control unit 360 sets the voltage Vop2 of the second battery 160 as a target voltage, and controls the boost converter 200 so that the output voltage Vc of the boost converter 200 on the inverter 202 side becomes equal to the target voltage Vop2.

The voltage determination unit 362 determines whether the absolute value of the difference between the output voltage Vc and the voltage Vop2 of the second battery 160 is equal to or below a predetermined value D. It should be noted that the predetermined value D may be a threshold that makes it possible to determine that the output voltage Vc and the voltage Vop2 are approximately equal to each other. For example, the predetermined value D may be set to zero, or may be to a value larger than zero to account for possible errors in the readings of the voltage sensors 166 and 208 and the like.

If the absolute value of the difference between the output voltage Vc and the voltage Vop2 is equal to or below the predetermined value D, the second relay control unit 364 sends the control signal CONT5 to the second relay 162 to connect the second relay 162. It should be noted that the second relay control unit 364 may connect the second relay 162, for example, if the voltage determination flag is turned on.

The converter shutoff control unit 366 shuts the boost converter 200 off after the second relay 162 is turned on. More specifically, the converter shutoff control unit 366 stops the switching operations of the IGBT elements Q1, Q2.

In this embodiment of the invention, the SOC determination unit 352, the first boost control unit 354, the current determination unit 356, the first relay control unit 358, the second boost control unit 360, the voltage determination unit 362, the second relay control unit 364, and the converter shutoff control unit 366 are all described as implemented through software stored in the memory by the CPU of the ECU 300, but may also be implemented through hardware. It should be noted that such programs may also be recorded on a storage medium and mounted on the vehicle.

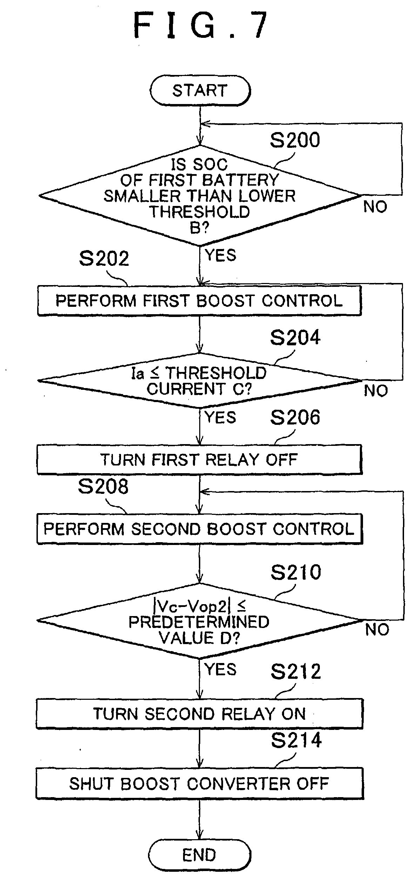

Next, referring to FIG. 7, the control structure of a program executed by the vehicular electric power unit ECU 300 to switch the electric power supply source from the first battery 150 to the second battery 160 when the SOC of the first battery 150 has fallen, will be described.

In S200, the ECU 300 determines whether the SOC of the first battery 150 has fallen below the lower threshold B. If the SOC of the first battery 150 has fallen below the lower threshold B (YES in S200), the process proceeds to S202. Otherwise (NO in S200), the process returns to S200.

In S202, the ECU 300 executes the first boost control. That is, the ECU 300 sets the voltage Vop1 of the first battery 150 as a target voltage, and controls the boost converter 200 to boost the output voltage Vc of the boost converter 200 on the inverter 202 side to the target voltage Vop1.

In S204, the ECU 300 determines whether the current la is equal to or below the threshold current C. If the current Ia is equal to or below the threshold current C (YES in S204), the process proceeds to S206. Otherwise (NO in S204), the process returns to S202.

In S206, the ECU 300 disconnects the first relay 152. In S208, the ECU 300 executes the second boost control. That is, the ECU 300 sets the voltage Vop2 of the second battery 160 as the target voltage, and controls the boost converter 200 to boost the output voltage Vc of the boost converter 200 to the target voltage Vop2.

In S210, the ECU 300 determines whether the absolute value of the difference between the output voltage Vc and the voltage Vop2 of the second battery 160 is equal to or smaller than the predetermined value D. If it is determined that the absolute value of the difference between the output voltage Vc and the voltage Vop2 of the second battery 160 is equal to or below the predetermined value D (YES in S210), the process proceeds to S212. Otherwise (NO in S210), the process returns to S208.

In S212, the ECU 300 connects the second relay 162 of the second battery 160. In S214, the ECU 300 shuts the boost converter 200 off.

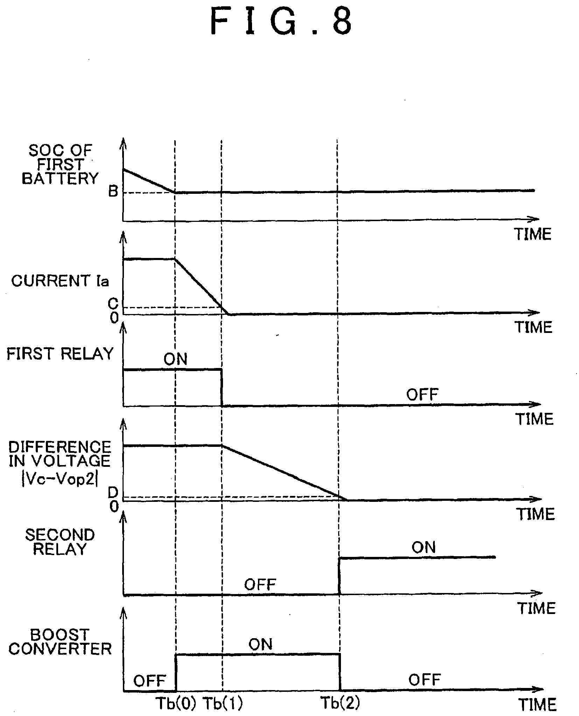

The operation of switching the electric power supply source from the first battery 150 to the second battery 160 when the SOC of the first battery 150 has fallen during the activation of the system of the vehicle 2 executed by the vehicular electric power unit ECU 300 will be described with reference to FIG. 8.

For example, if the vehicle 2 is traveling with the motor-generator 30 driven by drawing electric power from the first battery 150 , the SOC of the first battery 150 will fall over time.

When the SOC of the first battery 150 has fallen below the lower threshold B (YES in S200) at a time Tb(0), the boost converter 200 is turned on, and first boost control is executed (S202). Therefore, the current la starts falling at the time Tb(0).

If the current Ia falls to or below the lower threshold B (YES in S204) at a time Tb(1), the first relay 152 of the first battery 150 is disconnected (S206), and second boost control is executed (S208).

The output voltage Vc will approach the voltage Vop2 over time by the second boost control. Therefore, the absolute value of the difference between the output voltage Vc and the voltage Vop2 of the second battery 160 starts falling at the time Tb(1).

Further, at this moment, both the first relay 152 and the second relay 162 are disconnected. Therefore, the electric power of the base battery 100, boosted by the boost converter 200, is supplied to the inverter 202.

If the absolute value of the difference between the output voltage Vc and the voltage Vop2 of the second battery 160 is equal to or below the predetermined value d at a time Tb(2), the second relay 162 of the second battery 160 is connected, and the boost converter 200 is shut off. At this moment, the electric power of the second battery 160 is supplied to the inverter 202.

By thus making sure that there is no period in which the first relay 152 and the second relay 162 are connected at the same time and switching the electric power supply source from the first battery 150 to the second battery 160, arcing at a contact portion in disconnecting the first relay 152 and connecting the second relay 162 and the like may be suppressed. Further, in a period in which both the first relay 152 and the second relay 162 are disconnected before the switching of the electric power supply source to the second battery 160 is completed, the vehicle may continue to run without causing a fall in driving force, by drawing electric power from the base battery 100.

The operation of changing over the electric power supply source from the first battery 150 to the second battery 160 in accordance with the decrease in the SOC of the first battery 150 when the motor-generator 30 is driven by drawing electric power from the first battery 150 has been described above. However, the same holds true for the operation of switching the electric power supply source from the second battery 160 to the first battery 150 in accordance with a decrease in the SOC of the second battery 160 when the motor-generator 30 is driven by drawing electric power from the second battery. Therefore, the detailed description of this operation will not be repeated.

The operation of the vehicular electric power unit when the SOC of the base battery 100 has fallen below a lower threshold E while the power from the first battery 150 is being drawn as described below.

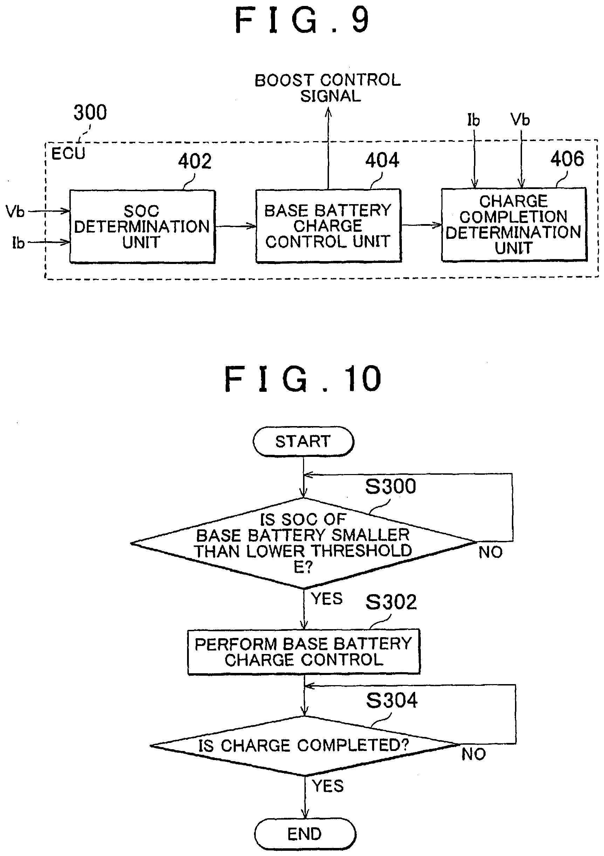

FIG. 9 shows a functional block diagram for the operation of charging the base battery 100 performed by the vehicular electric power unit ECU 300 when the SOC of the base battery 100 has fallen below the lower threshold E while the power from the first battery 150 is being drawn, according to this embodiment of the invention.

The ECU 300 includes an SOC determination unit 402, a base battery charge control unit 404, and a charge completion determination unit 406.

The SOC determination unit 402 determines whether the SOC of the base battery 100 has fallen below the lower threshold E. For example, the SOC determination unit 402 estimates the SOC of the base battery 100 based on the voltage Vb and current Ib of the base battery 100 to determine whether the estimated SOC has fallen below the lower threshold E. It should be noted that the SOC determination unit 402 may, for example, turn a second SOC decrease determination flag on if it determines that the estimated SOC has fallen below the lower threshold E.

If the SOC of the base battery 100 has fallen below the lower threshold E, the base battery charge control unit 404 starts charging the base battery 100. For example, the base battery charge control unit 404 controls the boost converter 200 to draw electric power from the first battery 150 to charge the base battery 100.

More specifically, when the first relay 152 of the first battery 150 and the second relay 162 of the second battery 160 are both turned on, the base battery charge control unit 404 sets a predetermined voltage that is lower than the voltage Vop1 of the first 150 as a target voltage, and controls the boost converter 200 so that the set target voltage is obtained. The voltage set as the target voltage should not be limited in particular as long as it is a voltage at which the base battery 100 is appropriately charged by drawing power from the first battery 150.

The base battery charge control unit 404 may set the target voltage and control the boost converter 200 such that the set target voltage is obtained, for example, when the second SOC decrease determination flag is on.

Further, in addition to or instead of the charging of the base battery 100 by drawing electric power from the first battery 150, the base battery charge control unit 404 may charge the base battery 100 using electric power generated by the inverter 202 during, for example, regenerative brake by the vehicle 2. In this manner as well, the base battery 100 can be charged.

The charge completion determination unit 406 determines whether the charging of the base battery 100 has been fully charged. The charge completion determination unit 406 may determine that the charging of the base battery 100 is fully charged, for example, when the SOC of the base battery 100 equals or exceeds than an upper threshold F, or after a predetermined period of time has elapsed after the base battery charge control unit 404 has started the charging of the base battery 100. The upper threshold F should not be limited in particular as long as it is greater than the lower threshold E. The upper threshold F may be determined empirically or estimated theoretically.

The charge completion determination unit 406 may, for example, turn a charge completion determination flag on when it is determined that of the base battery 100 has been full charged.

Next, referring to FIG. 10, the operation of the vehicular electric power unit ECU 300 when the SOC of the base battery 100 has fallen below the lower threshold E while drawing power from the first battery 150, will be described next.

In S300, the ECU 300 determines whether the SOC of the base battery 100 has fallen below the lower threshold E. If the SOC of the base battery 100 has fallen below the lower threshold E (YES in S300), the process is proceeds to S302. Otherwise (NO in S300), the process returns to S300.

In S302, the ECU 300 executes a base battery charge control. That is, the ECU 300 controls the boost converter 200 to draw electric power from the first battery 150 to charge the base battery 100.

In S304, the ECU 300 determines whether the charging of the base battery 100 has been completed. If the charging of the base battery 100 has been completed (YES in S304), this process is terminated. Otherwise (NO in S304), the process returns to S302.

The operation performed by the vehicular electric power unit ECU 300 when the SOC of the base battery 100 has fallen below the predetermined lower threshold E while drawing power from the first battery 150will be described next.

For example, if the vehicle 2 is traveling with the motor-generator 30 driven by drawing electric power from the first battery 150, the SOC of the base battery 100 may continue to fall over time even if no electric power is supplied to the motor generator 30 due to the operation of a DC/DC converter or the operation of an air-conditioner inverter.

If the SOC of the base battery 100 has fallen below the threshold value e (YES in S300), the base battery 100 is charged by drawing electric power from the first battery"?] 150 (S302). Thus, the SOC of the base battery 100 is increased.

The voltage of the battery 150 is higher than the voltage of the base battery 100 even when the SOC of the first battery 150 approaches the lower threshold B, which indicates the lower limit, and that the base battery 100 may therefore be charged by drawing electric power from the first battery 150 until the switch to the second battery 160 is completed.

When the SOC of the base battery 100 reaches at least the upper threshold F or when a prescribed period of time has elapsed after charging has commenced, it is determined that the base battery 100 has bee fully charged (YES in S304).

The charge control of the base battery 100 may be suspended when switching from the first battery 150 to the second battery 160 due to the decrease in the SOC of the first battery 150 during operation of the vehicle.

As described above, even when the SOC of the base battery 100 has fallen during the use of the first battery 150, the base battery 100 may be charged by drawing electric power from the first battery 150.

Although the operation of charging the base battery 100 by drawing electric power of the first battery 150 when the SOC of the base battery 100 has fallen during the use of the first battery 150 has been described above, the same holds true when charging the base battery 100 by drawing electric power of the second battery 160 when the SOC of the base battery 100 has fallen during the use of the second battery 160. Therefore, the detailed description of this operation will not be repeated.

In the manner described above, according to the vehicular electric power unit, that has the configuration of the base battery, the converter, and the inverter, according to this embodiment of the invention, the positive electrode of the first battery is connected with the node provided on the electric power line between the boost converter and the inverter. Therefore, in the production process of a vehicle or during after-sales service for the vehicle, arcing at the time of mounting [??]the battery is suppressed in comparison to the first battery is connected in parallel with the base battery. Further, because a single grounding line SL1 may be shared by the base battery and the first battery or the second battery, the battery assembly may be connected with the PCU using only three power cables. Furthermore, a single current sensor 21 may be employed to monitor the current flowing through both the first battery and the second battery. Therefore, an unnecessary increase in the number of parts due to the addition of the optional batteries may be suppressed.

Furthermore, the lower threshold voltage of the first battery is set higher than the upper threshold voltage of the base battery even when the SOC of the first battery approaches the lower threshold voltage. Therefore, even when the SOC of the base battery has fallen, the base battery may be charged using the electric power of the first battery.

Furthermore, the first relay and the second relay are controlled so that both are not energized at the same time. Therefore, the arcing when connecting or disconnecting the first relay and second relay, and the circulation of current between the first battery and the second battery may be suppressed.

Furthermore, when receiving a request to switch the electric power supply source from the first battery to the second battery, the ECU sets the voltage of the first battery as a target voltage, controls the boost converter so that the current la becomes approximately equal to zero, and controls the first relay and the second relay to switch the electric power supply source, thereby making it possible to suppress arcing when disconnecting the first relay. Further, after the first relay is turned off, the ECU sets the voltage of the second battery as a target voltage, and controls the boost converter such that the difference between the output voltage and the target voltage approaches zero, thereby making it possible to suppress arcing when connecting the second relay.

In the above-described embodiment of the invention, electric power is supplied from at least one of the first battery and the second battery to the base battery. However, the invention is not restricted to this configuration. For example, it is also appropriate to adopt a configuration in which electric power is supplied from the base battery to at least one of the first battery and the second battery.

## Claims

1. An electric power unit for a vehicle mounted on the vehicle, the electric power unit comprising:
a first electric storage device (100);
a converter (200) for converting voltage supplied from the first electric storage device (100) to a target voltage and supplying the voltage converted electric power to an electric component (202);
an electric power line (PL1, SL1) that connects the electric component (202) with the converter (200); and
a second electric storage device (150) that has a positive electrode connected with a node (212) provided on a positive electrode electric power line (PL1) of the electric power line (PL1, SL1), for supplying electric power to the electric component (202),
wherein the second electric storage device (150) has a lower threshold voltage that is set higher than an upper threshold voltage of the first electric storage device (100), further comprising:
a first relay (162) that is provided in series with the second electric storage device (150), for connecting and disconnecting the second electric storage device (150) with the electric power line (PL1, SL1);
a third electric storage device (160);
a second relay (162) that is provided in series with the third electric storage device (160), for connecting and disconnecting the third electric storage device (160) with the electric power line (PL1, SL1);
a relay control unit that controls the first and second relays (152, 162),
wherein the second electric storage device (160) and the first relay (152), and the third electric storage device (160) and the second relay (162) are connected in parallel with one another, and
wherein the relay control unit controls the first relay (152) and the second relay (162) in such a manner as to individually connect the first relay (152) and second relay (162) with the electric power line (PL1, SL1) for switching a source of electric power supply from one of the second electric storage device (150) and the third electric storage device (160) to the other electric storage device, further comprising
a detection unit (210) for detecting a current between the positive electrode of the second electric storage device (150) and the node (212); and
a converter control unit for controlling the converter (200) in accordance with the current detected by the detection unit (210),
wherein the converter control unit controls the converter (200) such that the current detected by the detection unit (210) becomes equal to or smaller than a threshold current indicating that a voltage of one of the second electric storage device (150) and the third electric storage device (160) is equal to an output voltage of the converter (200), when switching a source of electric power supply from one of the second electric storage device (150) and the third electric storage device (160) to the other electric storage device, and
wherein the converter control unit commands the relay control unit to switch the electric power supply source when the current detected by the detection unit (210) falls to or below the threshold current.

2. The electric power unit for a vehicle according to claim 1, wherein:
the positive electrode electric power line (PL1) of the electric power line (PL1, SL1) is connected to the positive electrode of the second electric storage device (150), the positive electrode of the electric component (202), and the positive electrode of the converter (200), and
a negative electrode electric power line (SL1) of the electric power line (PL1, SL1) is connected to the negative electrode of the first electric storage device (100), the negative electrode of the second electric storage device (150), the negative electrode of the electric component (202), and the negative electrode of the converter (200).

3. The electric power unit for a vehicle according to claim 2, wherein the positive electrode of the first electric storage device (100) is connected to the node (212) provided on the positive electrode electric power line (PL1) of the electric power line (PL1, SL1) via the converter (200).

4. The electric power unit for a vehicle according to any one of claims 1 to 3, further comprising:
a system main relay that is provided between the first electric storage device (100) and the converter (200), for connecting and disconnecting the first electric storage device (100) and the converter (200); wherein
the relay control unit further controls the system main relay,
wherein the relay control unit controls the system main relay to connect the first electric storage device (100) and the converter (200) until the voltage supplied from the first electric storage device (100) reaches the target voltage, and
wherein the relay control unit controls the first relay (152) to connect the second electric storage device (150) with the electric power line (PL1, SL1) when the voltage supplied from the first electric storage device (100) reaches the target voltage.

5. The electric power unit for a vehicle according to any one of claims 1 to 3, further comprising:
a system main relay that is provided between the first electric storage device (100) and the converter (200), for connecting and disconnecting the first electric storage device (100) and the converter (200);
the relay control unit being further for controlling the system main relay; and
a charge control unit (404) that controls the relay control unit and the converter control unit,
wherein the charge control unit (404) controls the converter control unit such that the voltage supplied from the first electric storage device (100) approaches the voltage supplied from the second electric storage device (150) when a storage amount of the second electric storage device (150) falls below a lower threshold, and
wherein the charge control unit (404) controls the first relay (152) to connect the second electric storage device (150) with the electric power line (PL1, SL1) and controls the system main relay to connect the first electric storage device (100) and the converter (200), when a difference between the voltage supplied from the first electric storage device (100) and the voltage supplied from the second electric storage device (150) falls below a predetermined value.

6. A method of controlling an electric power unit for a vehicle that includes at least a first electric storage device (100);
a converter (200) for converting voltage supplied from the first electric storage device (100) to a target voltage and supply the voltage converted electric power to the electric component (202);
the electric power unit further comprises
a second electric storage device (150) and a third electric storage device (160) that can be connected with an electric component (202), a first relay (152) that is provided in series with the second electric storage device (150), for connecting and disconnecting the second electric storage device (150) with the electric power line (PL1, SL1), a second relay (162) that is provided in series with the third electric storage device (160), for connecting and disconnecting the third electric storage device (160) with the electric power line (PL1, SL1), a relay control unit that controls the first and second relays (152, 162), wherein the second electric storage device (150) and the first relay (152) and the third electric storage device (160) and the second relay (162) are connected in parallel with one another, a detection unit (210) for detecting a current between a positive electrode of the second electric storage device (150) and a node (212); and a converter control unit for controlling the converter (200) in accordance with the current detected by the detection unit (210), the method **characterized by** comprising:
controlling the voltage supplied from the second electric storage device (150) to match the voltage supplied from the first electric storage device (100) when the first electric storage device (100) is connected with the electric component (202); and
disconnecting the first electric storage device (100) from the electric component (202) and connecting the second electric storage device (150) with the electric component (202), when a difference between the voltage supplied from the second electric storage device (150) and the voltage supplied from the first electric storage device (100) falls below a predetermined value,
wherein the second electric storage device (150) has a lower threshold voltage that is set higher than an upper threshold voltage of the first electric storage device (100), the method further comprising:
controlling the first relay (152) and the second relay (162) in such a manner as to individually connect the first relay (152) and second relay (162) with the electric power line (PL1, SL1) for switching a source of electric power supply from one of the second electric storage device (150) and the third electric storage device (160) to the other electric storage device,
controlling the converter (200) such that the current detected by the detection unit (210) becomes equal to or smaller than a threshold current indicating that a voltage of one of the second electric storage device (150) and the third electric storage device (160) is equal to an output voltage of the converter (200), when switching a source of electric power supply from one of the second electric storage device (150) and the third electric storage device (160) to the other electric storage device, and
commanding the relay control unit to switch the electric power supply source when the current detected by the detection unit (210) falls to or below the threshold current.

## Patentansprüche

1. Elektrische Leistungseinheit für ein Fahrzeug, die an dem Fahrzeug angebracht ist, wobei die elektrische Leistungseinheit aufweist:
eine erste elektrische Speichereinrichtung (100);
einen Wandler (200) zum Wandeln einer Spannung, die von der ersten elektrischen Speichereinrichtung (100) zugeführt wird, in eine Sollspannung und Zuführen der spannungsgewandelten elektrischen Leistung an eine elektrische Komponente (202);
eine elektrische Leistungsleitung (PL1, SL1), die die elektrische Komponente (202) mit dem Wandler (200) verbindet; und
eine zweite elektrische Speichereinrichtung (150), deren positive Elektrode mit einem Knoten (212) verbunden ist, der auf einer elektrischen Leistungsleitung (PL1) einer positiven Elektrode der elektrischen Leistungsleitung (PL1, SL1) bereitgestellt ist, zum Zuführen der elektrischen Leistung an die elektrische Komponente (202),
wobei die zweite elektrische Speichereinrichtung (150) eine untere Schwellenwertspannung aufweist, die höher eingestellt ist als eine obere Schwellenwertspannung der ersten elektrischen Speichereinrichtung (100), weiterhin mit:
einem ersten Relais (162), das in Reihe mit der zweiten elektrischen Speichereinrichtung (150) bereitgestellt ist, zum Verbinden und Trennen der zweiten elektrischen Speichereinrichtung (150) mit der elektrischen Leistungsleitung (PL1, SL1);
einer dritten elektrischen Speichereinrichtung (160);
einem zweiten Relais (162), das in Reihe mit der dritten elektrischen Speichereinrichtung (160) bereitgestellt ist, zum Verbinden und Trennen der dritten elektrischen Speichereinrichtung (160) mit der elektrischen Leistungsleitung (PL1, SL1);
einer Relaissteuerungseinheit, die das erste und zweite Relais (152, 162) steuert,
wobei die zweite elektrische Speichereinrichtung (160) und das erste Relais (152) und die dritte elektrische Speichereinrichtung (160) und das zweite Relais (162) parallel zueinander verbunden sind, und
wobei die Relaissteuerungseinheit das erste Relais (152) und das zweite Relais (162) auf solch eine Weise steuert, um das erste Relais (152) und das zweite Relais (162) einzeln mit der elektrischen Leistungsleitung (PL1, SL1) zu verbinden, zum Umschalten einer Quelle einer elektrischen Leistungsversorgung von einer der zweiten elektrische Speichereinrichtung (150) und der dritten elektrischen Speichereinrichtung (160) zu der anderen elektrischen Speichereinrichtung, weiterhin mit
einer Erfassungseinheit (210) zum Erfassen eines Stroms zwischen der positiven Elektrode der zweiten elektrischen Speichereinrichtung (150) und dem Knoten (212); und
einer Wandlersteuerungseinheit zum Steuern des Wandlers (200) gemäß dem Strom, der durch die Erfassungseinheit (210) erfasst wird,
wobei die Wandlersteuerungseinheit den Wandler (200) steuert, sodass der Strom, der durch die Erfassungseinheit (210) erfasst wird, gleich oder kleiner als ein Schwellenwertstrom wird, der angibt, dass eine Spannung von einer der zweiten elektrischen Speichereinrichtung (150) und der dritten elektrischen Speichereinrichtung (160) gleich einer Ausgabespannung des Wandlers (200) ist, wenn eine Quelle einer elektrischen Leistungsversorgung von einer der zweiten elektrischen Speichereinrichtung (150) und der dritten elektrischen Speichereinrichtung (160) zu der anderen elektrischen Speichereinrichtung umgeschaltet wird, und
wobei die Wandlersteuerungseinheit die Relaissteuerungseinheit anweist, die elektrische Leistungsversorgungsquelle umzuschalten, wenn der Strom, der durch die Erfassungseinheit (210) erfasst wird, auf oder unter den Schwellenwertstrom fällt.

2. Elektrische Leistungseinheit für ein Fahrzeug gemäß Anspruch 1, wobei:
die elektrische Leistungsleitung (PL1) einer positiven Elektrode der elektrischen Leistungsleitung (PL1, SL1) mit der positiven Elektrode der zweiten elektrischen Speichereinrichtung (150), der positiven Elektrode der elektrischen Komponente (202) und der positiven Elektrode des Wandlers (200) verbunden ist, und
eine elektrische Leistungsleitung (SL1) einer negativen Elektrode der elektrischen Leistungsleitung (PL1, SL1) mit der negativen Elektrode der ersten elektrischen Speichereinrichtung (100), der negativen Elektrode der zweiten elektrischen Speichereinrichtung (150), der negativen Elektrode der elektrischen Komponente (202) und der negativen Elektrode des Wandlers (200) verbunden ist.

3. Elektrische Leistungseinheit für ein Fahrzeug gemäß Anspruch 2, wobei die positive Elektrode der ersten elektrischen Speichereinrichtung (100) mit dem Knoten (212), der auf der elektrischen Leistungsleitung (PL1) einer positiven Elektrode der elektrischen Leistungsleitung (PL1, SL1) bereitgestellt ist, über den Wandler (200) verbunden ist.

4. Elektrische Leistungseinheit für ein Fahrzeug gemäß einem der Ansprüche 1 bis 3, weiterhin mit:
einem Systemhauptrelais, das zwischen der ersten elektrischen Speichereinrichtung (100) und dem Wandler (200) bereitgestellt ist, zum Verbinden und Trennen der ersten elektrischen Speichereinrichtung (100) und des Wandlers (200); wobei
die Relaissteuerungseinheit weiterhin das Systemhauptrelais steuert,
wobei die Relaissteuerungseinheit das Systemhauptrelais steuert, um die erste elektrische Speichereinrichtung (100) und den Wandler (200) zu verbinden, bis die Spannung, die von der ersten elektrischen Speichereinrichtung (100) zugeführt wird, die Sollspannung erreicht, und
wobei die Relaissteuerungseinheit das erste Relais (152) steuert, um die zweite elektrische Speichereinrichtung (150) mit der elektrischen Leistungsleitung (PL1, SL1) zu verbinden, wenn die Spannung, die von der ersten elektrischen Speichereinrichtung (100) zugeführt wird, die Sollspannung erreicht.

5. Elektrische Leistungseinheit für ein Fahrzeug gemäß einem der Ansprüche 1 bis 3, weiterhin mit:
einem Systemhauptrelais, das zwischen der ersten elektrischen Speichereinrichtung (100) und dem Wandler (200) bereitgestellt ist, zum Verbinden und Trennen der ersten elektrischen Speichereinrichtung (100) und des Wandlers (200);
wobei die Relaissteuerungseinheit weiterhin zum Steuern des Systemhauptrelais dient; und
einer Ladungssteuerungseinheit (404), die die Relaissteuerungseinheit und die Wandlersteuerungseinheit steuert,
wobei die Ladungssteuerungseinheit (404) die Wandlersteuerungseinheit derart steuert, dass die Spannung, die von der ersten elektrischen Speichereinrichtung (100) zugeführt wird, sich der Spannung, die von der zweiten elektrischen Speichereinrichtung (150) zugeführt wird, annähert, wenn ein Speicherbetrag der zweiten elektrischen Speichereinrichtung (150) unter einen unteren Schwellenwert fällt, und
wobei die Ladungssteuerungseinheit (404) das erste Relais (152) steuert, um die zweite elektrische Speichereinrichtung (150) mit der elektrischen Leistungsleitung (PL1, SL1) zu verbinden und das Systemhauptrelais steuert, um die erste elektrische Speichereinrichtung (100) und den Wandler (200) zu verbinden, wenn eine Differenz zwischen der Spannung, die von der ersten elektrischen Speichereinrichtung (100) zugeführt wird, und der Spannung, die von der zweiten elektrischen Speichereinrichtung (150) zugeführt wird, unter einen vorbestimmten Wert fällt.

6. Verfahren des Steuerns einer elektrischen Leistungseinheit für ein Fahrzeug, die zumindest eine erste elektrische Speichereinrichtung (100); einen Wandler (200) zum Wandeln einer Spannung, die von der ersten elektrischen Speichereinrichtung (100) zugeführt wird, in eine Sollspannung und Zuführen der spannungsgewandelten elektrischen Leistung an die elektrische Komponente (202);
wobei die elektrische Leistungseinheit weiterhin aufweist
eine zweite elektrische Speichereinrichtung (150) und eine dritte elektrische Speichereinrichtung (160), die mit einer elektrischen Komponente (202) verbunden werden können, ein erstes Relais (152), das in Reihe mit der zweiten elektrische Speichereinrichtung (150) bereitgestellt ist, zum Verbinden und Trennen der zweiten elektrischen Speichereinrichtung (150) mit der elektrischen Leistungsleitung (PL1, SL1), ein zweites Relais (162), das in Reihe mit der dritten elektrischen Speichereinrichtung (160) bereitgestellt ist, zum Verbinden und Trennen der dritten elektrischen Speichereinrichtung (160) mit der elektrischen Leistungsleitung (PL1, SL1), eine Relaissteuerungseinheit, die das erste und zweite Relais (152, 162) steuert, wobei die zweite elektrische Speichereinrichtung (150) und das erste Relais (152) und die dritte elektrische Speichereinrichtung (160) und das zweite Relais (162) parallel miteinander verbunden sind, eine Erfassungseinheit (210) zum Erfassen eines Stroms zwischen einer positiven Elektrode der zweiten elektrischen Speichereinrichtung (150) und einem Knoten (212); und eine Wandlersteuerungseinheit zum Steuern des Wandlers (200) gemäß dem Strom, der durch die Erfassungseinheit (210) erfasst wird, **dadurch gekennzeichnet, dass** das Verfahren aufweist:
Steuern der Spannung, die von der zweiten elektrischen Speichereinrichtung (150) zugeführt wird, um mit der Spannung, die von der ersten elektrischen Speichereinrichtung (100) zugeführt wird, übereinzustimmen, wenn die erste elektrische Speichereinrichtung (100) mit der elektrischen Komponente (202) verbunden ist; und
Trennen der ersten elektrischen Speichereinrichtung (100) von der elektrischen Komponente (202) und Verbinden der zweiten elektrischen Speichereinrichtung (150) mit der elektrischen Komponente (202), wenn eine Differenz zwischen der Spannung, die von der zweiten elektrischen Speichereinrichtung (150) zugeführt wird, und der Spannung, die von der ersten elektrischen Speichereinrichtung (100) zugeführt wird, unter einen vorbestimmten Wert fällt,
wobei die zweite elektrische Speichereinrichtung (150) eine untere Schwellenwertspannung aufweist, die höher eingestellt ist als eine obere Schwellenwertspannung der ersten elektrischen Speichereinrichtung (100),
wobei das Verfahren weiterhin aufweist:
Steuern des ersten Relais (152) und des zweiten Relais (162) auf solch eine Weise, um das erste Relais (152) und das zweite (162) einzeln mit der elektrischen Leistungsleitung (PL1, SL1) zu verbinden, zum Umschalten einer Quelle einer elektrischen Leistungsversorgung von einer der zweiten elektrischen Speichereinrichtung (150) und der dritten elektrischen Speichereinrichtung (160) zu der anderen elektrischen Speichereinrichtung,
Steuern des Wandlers (200), sodass der Strom, der durch die Erfassungseinheit (210) erfasst wird, gleich oder kleiner als ein Schwellenwertstrom wird, der angibt, dass eine Spannung von einer der zweiten elektrischen Speichereinrichtung (150) und der dritten elektrischen Speichereinrichtung (160) gleich einer Ausgabespannung des Wandlers (200) ist, wenn eine Quelle einer elektrischen Leistungsversorgung von einer der zweiten elektrischen Speichereinrichtung (150) und der dritten elektrischen Speichereinrichtung (160) zu der anderen elektrischen Speichereinrichtung umgeschaltet wird, und
Anweisen der Relaissteuerungseinheit, die elektrische Leistungsversorgungsquelle umzuschalten, wenn der Strom, der durch die Erfassungseinheit (210) erfasst wird, auf oder unter den Schwellenwertstrom fällt.

## Revendications

1. Unité de puissance électrique destinée à un véhicule montée sur le véhicule, l'unité de puissance électrique comprenant :
un premier dispositif de stockage électrique (100) ;
un convertisseur (200) pour convertir une tension fournie par le premier dispositif de stockage électrique (100) à une tension cible et fournir la puissance électrique convertie en tension à un composant électrique (202) ;
une ligne de puissance électrique (PL1, SL1) qui connecte le composant électrique (202) au convertisseur (200) ; et
un deuxième dispositif de stockage électrique (150) qui a une électrode positive connectée à un noeud (212) prévue sur une ligne de puissance électrique d'électrode positive (PL1) de la ligne de puissance électrique (PL1, SL1), pour fournir une puissance électrique au composant électrique (202),
dans laquelle le deuxième dispositif de stockage électrique (150) a une tension de seuil inférieure qui est réglée pour être plus haute qu'une tension de seuil supérieure du premier dispositif de stockage électrique (100), comprenant en outre :
un premier relais (162) qui est prévu en série avec le deuxième dispositif de stockage électrique (150), pour connecter le deuxième dispositif de stockage électrique (150) à et le déconnecter de la ligne de puissance électrique (PL1, SL1) ;
un troisième dispositif de stockage électrique (160) ;
un deuxième relais (162) qui est prévu en série avec le troisième dispositif de stockage électrique (160), pour connecter le troisième dispositif de stockage électrique (160) à et le déconnecter de la ligne de puissance électrique (PL1, SL1) ;
une unité de commande de relais qui commande les premier et deuxième relais (152, 162),
dans laquelle le deuxième dispositif de stockage électrique (160) et le premier relais (152), et le troisième dispositif de stockage électrique (160) et le deuxième relais (162) sont connectés en parallèle entre eux, et
dans laquelle l'unité de commande de relais commande le premier relais (152) et le deuxième relais (162) de manière à connecter individuellement le premier relais (152) et le deuxième relais (162) à la ligne de puissance électrique (PL1, SL1) pour commuter une source d'alimentation électrique à partir de l'un parmi le deuxième dispositif de stockage électrique (150) et le troisième dispositif de stockage électrique (160) vers l'autre dispositif de stockage électrique, comprenant en outre
une unité de détection (210) pour détecter un courant entre l'électrode positive du deuxième dispositif de stockage électrique (150) et le noeud (212) ; et
une unité de commande de convertisseur pour commander le convertisseur (200) suivant le courant détecté par l'unité de détection (210),
dans laquelle l'unité de commande de convertisseur commande le convertisseur (200) de sorte que le courant détecté par l'unité de détection (210) devienne inférieur ou égal à un courant de seuil indiquant qu'une tension de l'un parmi le deuxième dispositif de stockage électrique (150) et le troisième dispositif de stockage électrique (160) est égale à une tension de sortie du convertisseur (200), lors de la commutation d'une source d'alimentation électrique à partir de l'un parmi le deuxième dispositif de stockage électrique (150) et le troisième dispositif de stockage électrique (160) vers l'autre dispositif de stockage électrique, et
dans laquelle l'unité de commande de convertisseur ordonne à l'unité de commande de relais de commuter la source d'alimentation électrique lorsque le courant détecté par l'unité de détection (210) tombe jusqu'à ou en dessous du courant de seuil.

2. Unité de puissance électrique destinée à un véhicule selon la revendication 1, dans laquelle :
la ligne de puissance électrique d'électrode positive (PL1) de la ligne de puissance électrique (PL1, SL1) est connectée à l'électrode positive du deuxième dispositif de stockage électrique (150), à l'électrode positive du composant électrique (202), et à l'électrode positive du convertisseur (200), et
une ligne de puissance électrique d'électrode négative (SL1) de la ligne de puissance électrique (PL1, SL1) est connectée à l'électrode négative du premier dispositif de stockage électrique (100), à l'électrode négative du deuxième dispositif de stockage électrique (150), à l'électrode négative du composant électrique (202), et à l'électrode négative du convertisseur (200).

3. Unité de puissance électrique destinée à un véhicule selon la revendication 2, dans laquelle l'électrode positive du premier dispositif de stockage électrique (100) est connectée au noeud (212) prévu sur la ligne de puissance électrique d'électrode positive (PL1) de la ligne de puissance électrique (PL1, SL1) via le convertisseur (200).

4. Unité de puissance électrique destinée à un véhicule selon l'une quelconque des revendications 1 à 3, comprenant en outre :
un relais principal de système qui est prévu entre le premier dispositif de stockage électrique (100) et le convertisseur (200), pour connecter et déconnecter le premier dispositif de stockage électrique (100) et le convertisseur (200) ; dans laquelle
l'unité de commande de relais commande en outre le relais principal de système,
dans laquelle l'unité de commande de relais commande le relais principal de système pour connecter le premier dispositif de stockage électrique (100) et le convertisseur (200) jusqu'à ce que la tension fournie par le premier dispositif de stockage électrique (100) atteigne la tension cible, et
dans laquelle l'unité de commande de relais commande le premier relais (152) pour connecter le deuxième dispositif de stockage électrique (150) à la ligne de puissance électrique (PL1, SL1) lorsque la tension fournie par le premier dispositif de stockage électrique (100) atteint la tension cible.

5. Unité de puissance électrique destinée à un véhicule selon l'une quelconque des revendications 1 à 3, comprenant en outre :
un relais principal de système qui est prévu entre le premier dispositif de stockage électrique (100) et le convertisseur (200), pour connecter et déconnecter le premier dispositif de stockage électrique (100) et le convertisseur (200) ;
l'unité de commande de relais commande en outre le relais principal de système ; et
une unité de commande de charge (404) qui commande l'unité de commande de relais et l'unité de commande de convertisseur,
dans laquelle l'unité de commande de charge (404) commande l'unité de commande de convertisseur de sorte que la tension fournie par le premier dispositif de stockage électrique (100) soit proche de la tension fournie par le deuxième dispositif de stockage électrique (150) lorsqu'une quantité de stockage du deuxième dispositif de stockage électrique (150) tombe en dessous d'un seuil inférieur, et
dans laquelle l'unité de commande de charge (404) commande le premier relais (152) pour connecter le deuxième dispositif de stockage électrique (150) à la ligne de puissance électrique (PL1, SL1) et commande le relais principal de système pour connecter le premier dispositif de stockage électrique (100) et le convertisseur (200), lorsqu'une différence entre la tension fournie par le premier dispositif de stockage électrique (100) et la tension fournie par le deuxième dispositif de stockage électrique (150) tombe en dessous d'une valeur prédéterminée.

6. Procédé de commande d'une unité de puissance électrique destinée à un véhicule qui comporte au moins un premier dispositif de stockage électrique (100) ;
un convertisseur (200) pour convertir la tension fournie par le premier dispositif de stockage électrique (100) à une tension cible et fournir la puissance électrique convertie en tension au composant électrique (202) ;
l'unité de puissance électrique comprend en outre un deuxième dispositif de stockage électrique (150) et un troisième dispositif de stockage électrique (160) qui peuvent être connectés à un composant électrique (202), un premier relais (152) qui est prévu en série avec le deuxième dispositif de stockage électrique (150), pour connecter le deuxième dispositif de stockage électrique (150) à et le déconnecter de la ligne de puissance électrique (PL1, SL1), un deuxième relais (162) qui est prévu en série avec le troisième dispositif de stockage électrique (160), pour connecter le troisième dispositif de stockage électrique (160) à et le déconnecter de la ligne de puissance électrique (PL1, SL1), une unité de commande de relais qui commande les premier et deuxième relais (152, 162), dans lequel le deuxième dispositif de stockage électrique (150) et le premier relais (152), et le troisième dispositif de stockage électrique (160) et le deuxième relais (162) sont connectés en parallèle entre eux, une unité de détection (210) pour détecter un courant entre une électrode positive du deuxième dispositif de stockage électrique (150) et un noeud (212) ; et une unité de commande de convertisseur pour commander le convertisseur (200) suivant le courant détecté par l'unité de détection (210), le procédé **caractérisé en ce qu'**il comprend les étapes consistant à :
commander la tension fournie par le deuxième dispositif de stockage électrique (150) pour faire concorder la tension fournie par le premier dispositif de stockage électrique (100) lorsque le premier dispositif de stockage électrique (100) est connecté au composant électrique (202) ; et
déconnecter le premier dispositif de stockage électrique (100) du composant électrique (202) et connecter le deuxième dispositif de stockage électrique (150) au composant électrique (202), lorsqu'une différence entre la tension fournie par le deuxième dispositif de stockage électrique (150) et la tension fournie par le premier dispositif de stockage électrique (100) tombe en dessous d'une valeur prédéterminée,
dans lequel le deuxième dispositif de stockage électrique (150) a une tension de seuil inférieure qui est réglée pour être plus haute qu'une tension de seuil supérieure du premier dispositif de stockage électrique (100),
le procédé comprenant en outre les étapes consistant à :
commander le premier relais (152) et le deuxième relais (162) de manière à connecter individuellement le premier relais (152) et deuxième relais (162) à la ligne de puissance électrique (PL1, SL1) pour commuter une source d'alimentation électrique à partir de l'un parmi le deuxième dispositif de stockage électrique (150) et le troisième dispositif de stockage électrique (160) vers l'autre dispositif de stockage électrique,
commander le convertisseur (200) de sorte que le courant détecté par l'unité de détection (210) devienne inférieur ou égal à un courant de seuil indiquant qu'une tension de l'un parmi le deuxième dispositif de stockage électrique (150) et le troisième dispositif de stockage électrique (160) est égale à une tension de sortie du convertisseur (200), lors de la commutation d'une source d'alimentation électrique à partir de l'un parmi le deuxième dispositif de stockage électrique (150) et le troisième dispositif de stockage électrique (160) vers l'autre dispositif de stockage électrique, et
ordonner à l'unité de commande de relais de commuter la source d'alimentation électrique lorsque le courant détecté par l'unité de détection (210) tombe jusqu'à ou en dessous du courant de seuil.
